# EUROPÄISCHE PATENTANMELDUNG

(11) **EP 2 735 417 A1**
(43) Veröffentlichungstag der Anmeldung: **28.05.2014**
(21) Anmeldenummer: 13005380.4
(22) Anmeldetag: 15.11.2013
(51) Int. Cl.: B29C 45/16, B29C 45/17

(54) **Verfahren zum Spritzgießen von Kunststoff-Formteilen aus thermoplastischem Kunststoff**

(30) Priorität: 27.11.2012 DE 102012023112
(71) Anmelder: Wittmann Battenfeld GmbH, 2542 Kottingbrunn (AT)
(72) Erfinder: Eckardt, Helmut, 58540 Meinerzhagen (DE)
(74) Vertreter: Gosdin, Michael

(57) **Zusammenfassung**

Die Erfindung betrifft ein Verfahren zum Spritzgießen von Kunststoff-Formteilen (1) aus thermoplastischem Kunststoff, bei dem in die Kavität (2) eines Spritzgießwerkzeugs (3) mindestens zwei unterschiedliche thermoplastische Kunststoffschmelzen (A, B) eingespritzt werden, um das Formteil (1) zu bilden, wobei zunächst eine erste Kunststoffschmelze (A) in die Kavität (2) des Spritzgießwerkzeugs (3) eingespritzt wird, so dass die Kavität (2) zumindest teilweise mit der ersten Kunststoffschmelze (A) gefüllt wird, und wobei anschließend eine zweite Kunststoffschmelze (B) in die Kavität (2) des Spritzgießwerkzeugs (3) und in die erste sich in der Kavität (2) befindliche Kunststoffschmelze (A) eingespritzt wird. Um in einfacher und wirtschaftlicher Weise Formteile mit gezielt verstärkten Stellen bzw. Bereichen herstellen zu können, sieht die Erfindung vor, dass die Ausbreitung der zweiten Kunststoffschmelze (B) in der ersten Kunststoffschmelze (A) in eine definierte Richtung oder in einen definierten Bereich dadurch vorgegeben wird, dass vor oder während des Einspritzens der zweiten Kunststoffschmelze (B) in der ersten Kunststoffschmelze (A) ein Bereich (4) reduzierten Drucks erzeugt wird und/oder dass vor oder während des Einspritzens der zweiten Kunststoffschmelze (B) die Viskosität der zweiten Kunststoffschmelze (B) vergrößert wird.

## Beschreibung

Die Erfindung betrifft ein Verfahren zum Spritzgießen von Kunststoff-Formteilen aus thermoplastischem Kunststoff, bei dem in die Kavität eines Spritzgießwerkzeugs mindestens zwei unterschiedliche thermoplastische Kunststoffschmelzen eingespritzt werden, um das Formteil zu bilden, wobei zunächst eine erste Kunststoffschmelze in die Kavität des Spritzgießwerkzeugs eingespritzt wird, so dass die Kavität zumindest teilweise mit der ersten Kunststoffschmelze gefüllt wird, und wobei anschließend eine zweite Kunststoffschmelze in die Kavität des Spritzgießwerkzeugs und in die erste sich in der Kavität befindliche Kunststoffschmelze eingespritzt wird.

Leichte Bauteile mit hoher Steifigkeit werden in allen Anwendungsbereichen immer mehr gefordert. Besonders in der Automobilindustrie werden Strukturbauteile benötigt, die bei geringem Gewicht hohe Festigkeiten aufweisen.

Beim Spritzgießen lassen sich Gewichtsreduzierungen gegenüber kompakt gespritzten Formteilen durch chemisches oder physikalisches Schäumen der Kunststoffe erzeugen. Durch das Treibmittel in der Schmelze wird nicht nur das Gewicht reduziert, sondern es werden auch Einfallstellen vermieden und innere Spannungen und Verzug vermieden oder reduziert. Mit abnehmendem Gewicht der Formteile bezogen auf das Volumen fallen allerdings auch die mechanischen Eigenschaften ab (d. h. die mechanische Stabilität sinkt).

Durch die Zugabe eines Treibmittels wird die Viskosität der Schmelze verringert, so dass die Kavität mit geringerem Druck gefüllt wird und die Werkzeuginnendrücke geringer sind.

Durch Hinterspritzen von Verstärkungen wie Folien, GF- oder CF-Geweben oder -Gewirken, Organoblechen und ähnlichen Verstärkungen mit geschäumtem Kunststoff können z. B. die mechanischen Eigenschaften, wie Biegesteifigkeit und Zugfestigkeit, der geschäumten Formteile erheblich verbessert werden. Diese Verstärkungen sind jedoch auf der Oberfläche sichtbar oder zeichnen sich auf der Oberfläche ab.

Werden verstärkte Kunststoffe beim Spritzgießen geschäumt, wird ebenfalls eine Verbesserung der mechanischen Festigkeitswerte erzielt. Durch die Verstärkung des Kunststoffes, durch beispielsweise Glasfasern, Kohlestofffaser oder andere Verstärkungen, wird jedoch das spezifische Gewicht des Kunststoffes erhöht. Auch erhöht sich das Gewicht der mit verstärkten Kunststoffen versehenen Formteile gegenüber unverstärkten Formteilen.

Beim Sandwich-Spritzgießen werden beispielsweise zwei thermoplastische Kunststoffe nacheinander durch den gleichen Anguss oder zwei nebeneinander liegende Angüsse in die Kavität des Spritzgießwerkzeugs gespritzt. Dabei dringt das als zweites Material gespritzte Material in das innere zuerst gespritzte Kunststoffmaterial ein und breitet sich im zuerst gespritzten Material aus. Üblicherweise werden dabei das Hautmaterial kompakt und das Kernmaterial geschäumt gespritzt. Es können aber auch beiden Materialien (Haut- und Kernmaterial) geschäumt oder kompakt gespritzt werden.

Vom Sandwich-Spritzgießen ist bekannt, dass die Viskositäten der beiden Kunststoffe einen Einfluss auf die Verteilung des Innenmaterials haben. Durch Viskositätsunterschiede zwischen Haut- und Kernmaterial kann die Verteilung des Kernmaterials beeinflusst werden. Auch ist es bekannt, durch Überlaufkavitäten Hautmaterial zu verdrängen und das Vordringen des Kernmaterials zum Fließwegende zu begünstigen.

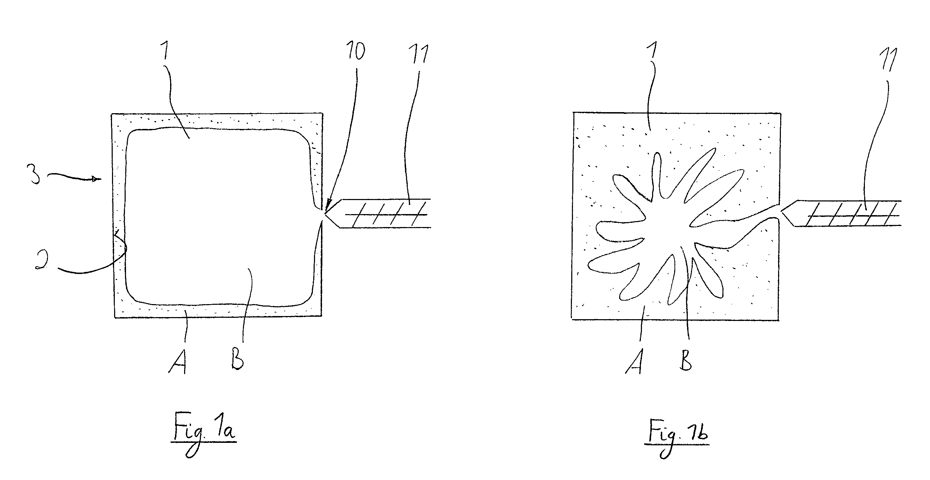

Fig. 1 zeigt den Verlauf von Hautmaterial (erste Kunststoffschmelze A) und Kernmaterial (zweite Kunststoffschmelze B) beim Sandwichspritzgießen. Dargestellt ist schematisch ein Spritzgießwerkzeug 3 mit einer Kavität 2, in die zwei unterschiedliche Kunststoffschmelzen A und B eingespritzt werden. Die eingespritzten Schmelzen bilden das Formteil 1. Das Einspritzen der Schmelzen erfolgt über einen Anguss 10 von einer Plastifizier- und Einspritzeinheit 11 aus.

In Fig. 1a ist zu sehen, wie sich bei Einspritzen beider Komponenten A, B durch einen Anguss 10 das Kernmaterial B im Hautmaterial A ausbreitet. Dabei werden Haut- und Kernmaterial zeitlich versetzt nacheinander mit oder ohne Überlappung eingespritzt. Ist die Viskosität des Hautmaterials A deutlich niedriger als die des Kernmaterials B, stellt sich die in Fig. 1a dargestellte Kernverteilung ein. Soll die Kernverteilung bis in bestimmte Bereiche erfolgen, so ist es bekannt, durch Verdrängen einer bestimmten Menge Hautmaterials A in eine Nebenkavität das Kernmaterial B in die gewünschten Bereiche zu bringen (nicht dargestellt).

Ähnliche Effekte sind auch bei der Fluidinjektionstechnik bekannt, bei der das als zweites eingespritzte Material ein Gas oder eine Flüssigkeit, z. B. Wasser, ist. Hier ist allerdings die Viskosität des Kernmaterials wesentlich kleiner als die des Hautmaterials. Die Verteilung der zweiten Komponente B ergibt sich infolge der Viskositätsunterschiede zwischen Hautmaterial A und Fluid, wie in Fig. 1b dargestellt. Bei der Gasinjektion wird durch geeignete Maßnahmen sichergestellt, dass die Gasverteilung wie gewünscht erfolgt.

Infolge der beschriebenen und illustrierten Effekte beim Einsatz von Schmelzen unterschiedlicher Viskosität ist es schwierig, eine Kernkomponente gezielt in einen Bereich zu leiten, in dem diese platziert werden soll.

Es ist zwar bekannt, geeignete Verstärkungen nach der Herstellung der geschäumten Spritzgieß-Formteile an diesen anzubringen. Auch ist es bekannt, in beim Spritzen oder nachträglich erzeugte Bohrungen Verstärkungen in Form von Profilen oder Stäben einzubringen. Dies führt nachteilhaft zu einem hohen Aufwand bei der Fertigung des Spritzgieß-Formteils. Weiterhin ist es abhängig von der Konzeption des Formteils nachteilig, dass die Verstärkung des Bauteils sichtbar ist.

Der Erfindung liegt daher die **Aufgabe** zugrunde, ein Verfahren der gattungsgemäßen Art so fortzubilden, dass es möglich wird, in einfacher und wirtschaftlicher Weise leichte Kunststoff-Formteile mit Verstärkungen herzustellen. Dabei sollen insbesondere leichte geschäumte Formteile hergestellt werden können, die gezielt an den Stellen bzw. Bereichen verstärkt sind, die einer Verstärkung bedürfen. Die genannten Formteile sollen dabei samt Verstärkungen in einem Arbeitsgang hergestellt werden können, so dass das fertige und verstärkt ausgeführte Formteil aus dem Werkzeug entnommen werden kann. Die Wirtschaftlichkeit des Verfahrens soll entsprechend hoch sein. Ins Kunststoff-Formteil eingebrachte Verstärkungen sollen dabei insbesondere vollständig vom Hautmaterial, d. h. bevorzugt von geschäumtem Kunststoff umgeben sein.

Die **Lösung** dieser Aufgabe durch die Erfindung ist dadurch gekennzeichnet, dass die Ausbreitung der zweiten Kunststoffschmelze (Kernkomponente) in der ersten Kunststoffschmelze (Hautkomponente) in eine definierte Richtung oder in einen definierten Bereich dadurch vorgegeben wird, dass vor oder während des Einspritzens der zweiten Kunststoffschmelze in der ersten Kunststoffschmelze ein Bereich reduzierten Drucks erzeugt wird und/oder dass vor oder während des Einspritzens der zweiten Kunststoffschmelze die Viskosität der zweiten Kunststoffschmelze vergrößert wird.

Das Erzeugen des Bereichs reduzierten Drucks erfolgt gemäß einer ersten bevorzugten Ausführungsform der Erfindung, indem ein zunächst in die Kavität hineinragender Schieber aus der Kavität des Spritzgießwerkzeugs bei bereits eingespritzter erster Kunststoffschmelze herausgezogen wird. Dabei wird bevorzugt die zweite Kunststoffschmelze in das Volumen innerhalb der Kavität injiziert, das vom sich zurückziehenden Schieber freigegeben wird.

Eine andere Ausgestaltung sieht vor, dass das Erzeugen des Bereichs reduzierten Drucks erfolgt, indem ein Teil der in die Kavität eingespritzten ersten Kunststoffschmelze in eine Überlaufkavität ausfließen gelassen wird, wobei das Volumen der Überlaufkavität vorzugsweise während des Ausfließens der ersten Kunststoffschmelze vergrößert wird.

Eine weitere Variante sieht vor, dass das Erzeugen des Bereichs reduzierten Drucks erfolgt, indem ein Teil der Wandung der Kavität bei bereits eingespritzter erster Kunststoffschmelze verschoben wird, so dass sich das Volumen der Kavität vergrößert.

Schließlich schlägt eine weitere Alternative vor, dass das Erzeugen des Bereichs reduzierten Drucks erfolgt, indem ein in den Strömungsweg zunächst hineinragendes Widerstandselement, das das Fließen der Kunststoffmaterials behindert, aus einer das Fließen behindernden Position in eine das Fließen nicht oder nur weniger behindernden Position zurückgezogen wird.

Die genannten Möglichkeiten können natürlich nicht nur alternativ sondern auch additiv eingesetzt werden.

Die Vergrößerung der Viskosität der zweiten Kunststoffschmelze kann erfolgen, indem die Temperatur der zweiten Kunststoffschmelze vor dem Eintritt in die erste Kunststoffschmelze verringert wird. Hierbei erfolgt vorzugsweise eine Kühlung der zweiten Kunststoffschmelze im Bereich des Angusses.

Die Vergrößerung der Viskosität der zweiten Kunststoffschmelze kann auch erfolgen, indem die Verarbeitung der zweiten Kunststoffschmelze im Verhältnis zur Verarbeitung der ersten Kunststoffschmelze bei geringerer Temperatur erfolgt.

Auch hier gilt, dass die genannten Maßnahmen zur Verringerung der Viskosität alternativ oder additiv vorgenommen werden können.

Ferner kann vorgesehen werden, dass in Kombination sowohl in der ersten Kunststoffschmelze ein Bereich reduzierten Drucks erzeugt wird als auch die Viskosität der zweiten Kunststoffschmelze vergrößert wird.

Die erste Kunststoffschmelze kann mit einem Treibmittel versehen werden oder es kann ein Fluid in die erste Kunststoffschmelze injiziert werden, um die erste Kunststoffschmelze aufzuschäumen.

Die zweite Kunststoffschmelze ist indes bevorzugt mit einem Verstärkungsmittel versehen. Dabei können Verstärkungsfasern vorgesehen sein, bevorzugt in Form von Kohlenstoff-Fasern oder Glasfasern.

Mit dem vorgeschlagenen Verfahren können in prozesstechnisch einfacher und wirtschaftlicher Weise leichte Kunststoff-Formteile hergestellt werden, die gezielt mit Verstärkungen versehen sind. Die Formteile können gezielt an definierten Stellen bzw. Bereichen verstärkt werden.

Dabei kann das verstärkte Formteil in einem Arbeitsgang hergestellt werden. Deshalb ist eine wirtschaftliche Fertigung sichergestellt.

Durch die Schaumstruktur im Innern des Formteils werden vorteilhafter Weise Spannungen zwischen dem Schaum und der Verstärkung abgebaut und Einfallstellen im Formteil vermieden.

In der Zeichnung sind Ausführungsbeispiele der Erfindung dargestellt. Es zeigen:
- Fig. 1a: schematisch ein Spritzgießwerkzeug mit Plastifizier- und Einspritzeinheit, in dem ein Kunststoff-Formteil spritzgegossen wird, das aus einer ersten Kunststoffschmelze (A) und einer zweiten Kunststoffschmelze (B) hergestellt wird, wobei die Viskosität der ersten Kunststoffschmelze wesentlich kleiner ist als die Viskosität der zweiten Kunststoffschmelze,
- Fig. 1b: schematisch das Spritzgießwerkzeug mit Plastifizier- und Einspritzeinheit analog zu Fig. 1a, wobei jetzt die Viskosität der ersten Kunststoffschmelze wesentlich größer ist als die Viskosität der zweiten Kunststoffschmelze,
- Fig. 2a: die geschnittene Vorderansicht und
- Fig. 2b: die geschnittene Seitenansicht eines Kunststoff-Formteils, bestehend aus einer geschäumten ersten Kunststoffkomponente und einer verstärkten zweiten Kunststoffkomponente,
- Fig. 3a: die geschnittene Vorderansicht eines weiteren Kunststoff-Formteils,
- Fig. 3b: die geschnittene Vorderansicht eines weiteren Kunststoff-Formteils,
- Fig. 4a: ein Spritzgießwerkzeug mit einem Schieber während eines ersten Verfahrensstadiums,
- Fig. 4b: das Spritzgießwerkzeug mit einem Schieber nach Fig. 4a während eines zweiten, späteren Verfahrensstadiums,
- Fig. 4c: das Spritzgießwerkzeug mit einem Schieber nach Fig. 4a während eines dritten, noch späteren Verfahrensstadiums,
- Fig. 5: ein Spritzgießwerkzeug mit einer Überlaufkavität während des Spritzgießprozesses,
- Fig.6a: ein Spritzgießwerkzeug mit einem verschieblichen Wandteil während eines ersten Verfahrensstadiums,
- Fig. 6b: das Spritzgießwerkzeug mit einem verschieblichen Wandteil nach Fig. 6a während eines zweiten, späteren Verfahrensstadiums,
- Fig. 6c: das Spritzgießwerkzeug mit einem verschieblichen Wandteil nach Fig. 6a während eines dritten , noch späteren Verfahrensstadiums,
- Fig. 7a: ein Spritzgießwerkzeug mit einem Widerstandselement während eines ersten Verfahrensstadiums,
- Fig. 7b: das Spritzgießwerkzeug mit dem Widerstandselement nach Fig. 7a während eines zweiten, späteren Verfahrensstadiums,
- Fig. 8: die geschnittene Vorderansicht eines weiteren Kunststoff-Formteils,
- Fig. 9: die geschnittene Vorderansicht eines weiteren Kunststoff-Formteils,
- Fig. 10: die geschnittene Vorderansicht eines weiteren Kunststoff-Formteils,
- Fig. 11: ein Spritzgießwerkzeug mit einem Kühlelement im Angussbereich,
- Fig. 12: die geschnittene Vorderansicht eines weiteren Kunststoff-Formteils,
- Fig. 13a: die Vorderansicht und
- Fig. 13b: die Seitenansicht eines Spritzgießwerkzeugs mit Angabe der Lage der Plastifizier- und Einspritzeinheiten für eine erste und eine zweite Kunststoffkomponente,
- Fig. 14a: die geschnittene Vorderansicht eines weiteren Kunststoff-Formteils,
- Fig. 14b: die geschnittene Vorderansicht eines weiteren Kunststoff-Formteils,
- Fig. 14c: die geschnittene Vorderansicht eines weiteren Kunststoff-Formteils,
- Fig. 15a: die geschnittene Vorderansicht der als Verstärkungskomponente eingespritzten zweiten Kunststoffkomponente gemäß einer ersten Ausformung,
- Fig. 15b: die geschnittene Vorderansicht der als Verstärkungskomponente eingespritzten zweiten Kunststoffkomponente gemäß einer zweiten Ausformung,
- Fig. 15c: die geschnittene Vorderansicht der als Verstärkungskomponente eingespritzten zweiten Kunststoffkomponente gemäß einer dritten Ausformung und
- Fig. 15d: die geschnittene Vorderansicht der als Verstärkungskomponente eingespritzten zweiten Kunststoffkomponente gemäß einer vierten Ausformung.

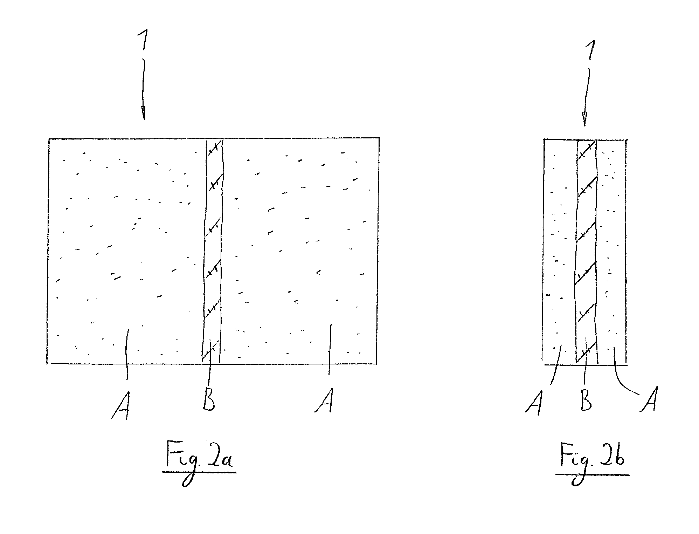

Fig. 2a und 2b zeigen (in der Vorderansicht bzw. in der Seitenansicht) ein Kunststoff-Fonnteil 1, wie es beispielshaft mit dem vorgeschlagenen Verfahren hergestellt werden kann. Das Formteil 1 besteht generell aus einer ersten Kunststoffkomponente A, die geschäumt ist. In diese Kunststoffkomponente A ist ein verstärktes Kunststoffmaterial B integriert, d. h. allseitig vom Material A umgeben. Dabei kann die Verstärkung in einem Bereich oder in mehreren gewünschten Bereichen vorgesehen werden; exemplarisch dargestellt ist die Anordnung nur einer Verstärkung im Formteil 1.

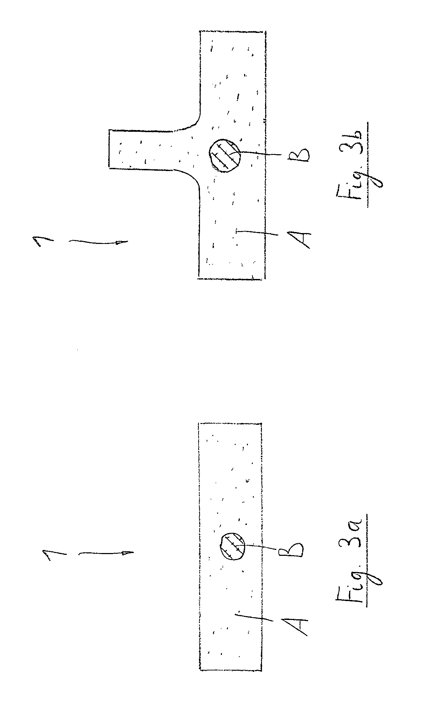

In Fig. 3a und 3b ist ein Formteil 1 zu sehen, bei dem ein plattenförmiges Bauteil aus der Kunststoff-Komponente A mit einer Verstärkung durch die Kunststoff-Komponente B versehen ist. Gemäß Fig. 3b kann das plattenförmige Bauteil auch eine oder mehrere Verstärkungsrippen aufweisen.

Ein Ziel der vorliegenden Erfindung ist die gezielte Einbringung der Verstärkung in Form der Kunststoffkomponente B in eine gewünschte Richtung in die Kunststoffkomponente A, die sich bereits in der Kavität des Spritzgießwerkzeugs befindet. Dies wird generell erfindungsgemäß durch zwei Maßnahmen erreicht, nämlich durch die Erzeugung eines Druckabfalls in einem Bereich der Kavität im zuerst eingespritzten Kunststoffmaterial und/oder durch Verminderung der Fließfähigkeit, d. h. der Viskosität, des zweiten Kunststoff-Materials. Damit wird der zweiten KunststoffKomponente B, die bevorzugt aus faserverstärktem Material besteht, eine Vorzugsfließrichtung verliehen.

Das Verstärkungsmaterial, d. h. die Kunststoff-Komponente B, fließt den Weg des geringsten Widerstandes. Die gewünschte Richtung kann also durch die genannten Maßnahmen vorgegeben werden.

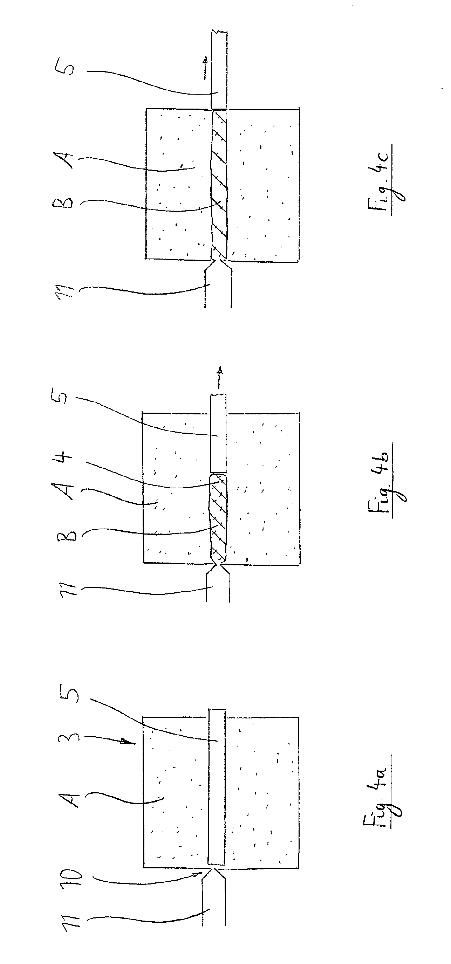

Fig. 4 zeigt eine Umsetzung des Konzepts der definierten Druckverminderung in der Kunststoff-Schmelze A.

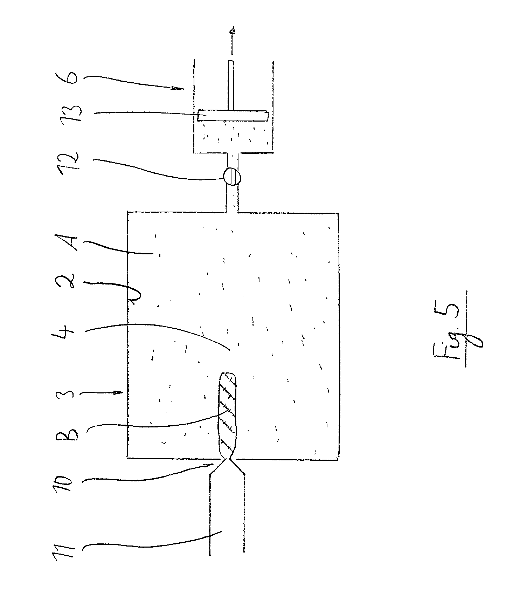

In den drei Teilfiguren Fig. 4a, 4b und 4c sind aufeinander folgende Prozessschritte illustriert. Im Spritzgießwerkzeug 3 ist zunächst ein Schieber 5 (Werkzeugkern) eingeschoben; der Schieber 5 kann dabei vollständig oder nur teilweise in die Kavität des Spritzgießwerkzeugs 3 hineinragen. In der Stellung des Schiebers 5 gemäß Fig. 5a wird die Kunststoffschmelze A in Form geschäumten Kunststoffes eingespritzt. Der Schieber 5 wird dann in Pfeilrichtung (s. Fig. 5b und 5c) aus der Kavität des Spritzgießwerkzeugs herausgezogen. Hinter dem Schieber 5 entsteht ein Bereich 4 reduzierten Drucks. Vor, mit oder nach Beginn der Einspritzung der verstärkten Kunststoffkomponente, d. h. der zweiten Kunststoffschmelze B, wird der Schieber 5 in Pfeilrichtung zurückgefahren. Durch das Druckgefälle infolge des frei werdenden Kavitätsvolumens, also durch den erzeugten Bereich 4 reduzierten Drucks, folgt der eingespritzte verstärkte Kunststoff der Rückzugsrichtung des Schiebers 5 und füllt schließlich ganz oder teilweise die gewünschte Fließweglänge der Kavität aus. Die Einspritzung der Komponente B erfolgt durch die Plastifizier- und Einspritzeinheit 11 über den Anguss 10.

In Fig. 5 wird das Druckgefälle durch Öffnen einer am Ende des Fließweges des verstärkten Kunststoffes B angeordneten Überlaufkavität 6 (Nebenkavität) erreicht. Über ein Ventil 12 kann die Verbindung zwischen Kavität 2 und Überlaufkavität 6 zunächst noch verschlossen werden. Vor, mit oder nach Beginn der Einspritzung des verstärkten Kernes, d. h. der zweiten Kunststoffschmelze B, wird das Ventil 12 geöffnet und so die Verbindung zur Überlaufkavität 6 geöffnet. Im Ausführungsbeispiel ist vorgesehen, dass zur Steuerung und zur Unterstützung des Druckgefälles die Überlaufkavität 6 mit einem Kolben 13 gezielt vergrößert werden kann (s. Pfeil in Fig. 5). Statt des Kolbens kann auch ein Vakuum angelegt werden. Auch so wird ein Bereich 4 reduzierten Drucks erzeugt, in den die zweite Kunststoffschmelze B gezielt fließt.

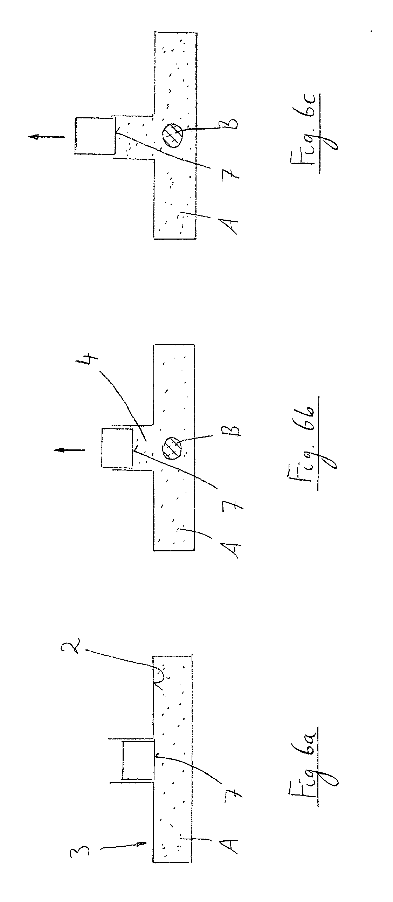

Fig. 6 zeigt in drei aufeinander folgenden Prozessschritten die Möglichkeit, die Druckdifferenz durch eine bewegliche Wandung 7 (zurückziehbaren Schieber) im Spritzgießwerkzeug 3 zu erzeugen. Dabei können ein oder mehrere Schieber 7 vor, mit oder nach dem Beginn der Einspritzung der verstärkten Kunststoffschmelze B gezogen werden (s. Pfeilrichtung in Fig. 6b und 6c). In den sich hierdurch ergebenden Bereich reduzierten Drucks wird das Material der zweiten Kunststoffschmelze B eingespritzt, hier senkrecht zur Zeichenebene.

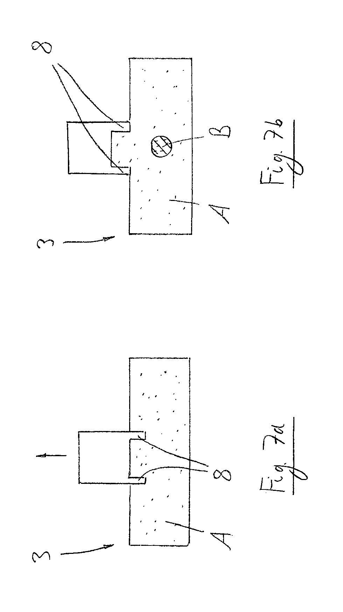

Fig. 7 zeigt, dass durch ein Widerstandselement 8 in Form einer Fließbremse derselbe Effekt erzeugt werden kann. Hier ist das Widerstandselement 8 zunächst in einer vorgeschobenen, in die Kavität hinein reichende Stellung gebracht. Das erste Kunststoffmaterial A wird (von links) eingespritzt. Dann wird das Widerstandselement 8 zurückgezogen (s. Pfeilrichtung in Fig. 7a). Der Fließwiderstand fällt folglich fort, so dass ein Druckabfall erzeugt wird, der wiederum die Vorzugrichtung für die einzuspritzende zweite Kunststoffschmelze B schafft, die hier auch wieder senkrecht zur Zeichenebene eingespritzt wird.

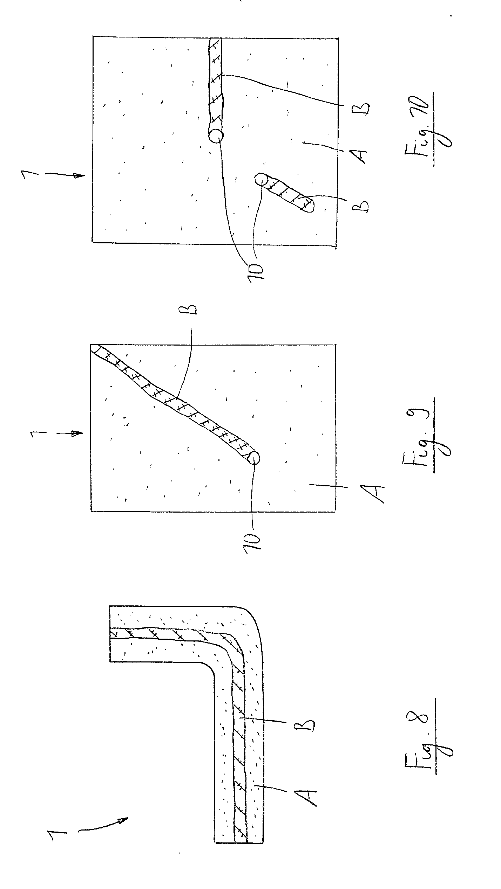

In Fig. 8 ist zu sehen, dass mit dem vorgeschlagenen Verfahren die lokalen Verstärkungen in Form der zweiten Kunststoffkomponente B auch dreidimensional eingebracht werden können.

Die Figuren 9 und 10 illustrieren, dass die Verstärkungen in Form der zweiten Kunststoffkomponente B auch in unterschiedlichen Richtungen und Bereichen des Formteils 1 platziert werden können. In Fig. 10 ist dargestellt, dass die Verstärkung in Form der zweiten Kunststoffkomponente B auch im Formteil 1 beginnen und an anderer Stelle enden kann. Der Ort des Angusses 10 ist dabei jeweils angedeutet.

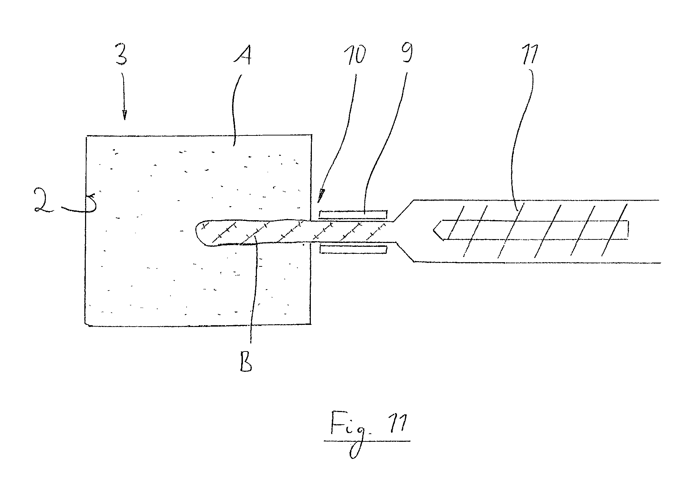

Dass das erfindungsgemäße Ziel der Schaffung einer Vorzugsfließrichtung der zweiten Kunststoffschmelze B in der ersten Kunststoffschmelze A auch durch gezielte Viskositätsveränderung erreicht werden kann, zeigt Fig. 11. Demgemäß ist es eine andere Möglichkeit, die Richtung der eingespritzten verstärkten Kunststoffkomponente B vorzugeben und zu beeinflussen, den Schmelzestrang B mit einer entsprechenden Viskosität einzuspritzen. Nach Fig. 1a würde sich eine verstärkte Schmelze B höherer Viskosität in die geschäumte Schmelze A so einbringen, dass sie sich über einen größeren Bereich der Kavität verteilt und dabei die Schaumstruktur verdichtet; das ist aber nicht erwünscht.

Deshalb muss die Viskosität der eingespritzten verstärkten zweiten Kunststoffschmelze B so groß sein, dass der Strang aus diesem Material in sich schon eine gewisse Stabilität aufweist und im Wesentlichen seinen Außendurchmesser beibehält.

Diese hohe Viskosität wird vorliegend im Ausführungsbeispiel durch eine niedrige Verarbeitungstemperatur des Kunststoffs - im Vergleich mit der ersten Kunststoffkomponenten A - erreicht. Zur Unterstützung kann eine Temperierung bzw. Kühlung der Maschinendüse oder des Angussbereichs erfolgen, so dass die zweite Kunststoffkomponente B abgekühlt wird und sich die Viskosität insbesondere der Randschicht des Materials dadurch erhöht. Hierdurch kommt es auch zu einer gewissen Kalibrierung des zweiten Schmelzematerials B beim Passieren der Einspritzdüse. Der Bereich der Maschinendüse (nicht näher dargestellt) ist daher von einem Kühlelement 9 umgeben, mit dem die Schmelze B gezielt abgekühlt werden kann.

Da sich der Strang aus (vor)geformtem, zweitem Schmelzematerial B vorzugsweise nur in Fließrichtung und nicht quer dazu in der geschäumten Schmelze A ausbreitet, eignet sich das Verfahren sehr gut dazu, auch hochgefüllte und langfaser-verstärkte Kunststoffe zu verwenden. Eine Zerstörung der Füllstoffe erfolgt durch die einfachen und klar definierten Fließwege nur in geringem Maße.

Zum Einspritzen der gefüllten zweiten Kunststoffschmelze B eignen sich verschiedene Spritzsysteme: In Frage kommen Schubschneckenspitzaggregate zum Spritzen und zur Intrusion, Schneckenplastifizier-Einheiten mit Schmelzespeicher und Extrusionsschnecken oder andere zur Schmelzeeinbringung geeignete Systeme.

Das Verstärkungsmaterial (Fasern) kann durch Intrusion in das Spritzgießwerkzeug eingebracht werden.

Es ist auch möglich, Endlosfasern in eine geeignete Schnecke einzubringen und diese durch direkte Intrusion oder über einen Schmelzespeicher bei sich kontinuierlich drehender Schnecke ins Werkzeug einzubringen.

Wie schon erwähnt, ist es auch möglich, eine Kombination von Druckdifferenz-Bildung und Viskositätsunterschied-Bildung einzusetzen. Demgemäß kann sowohl eine Druckabsenkung als auch eine Viskositätserhöhung vorgesehen werden, um eine optimale Verteilung des verstärkten Schmelzematerials B zu erreichen.

Durch die Orientierung der Fasern des verstärkten zweiten Schmelzematerials B in Fließrichtung können besonders hohe Kräfte aufgenommen werden.

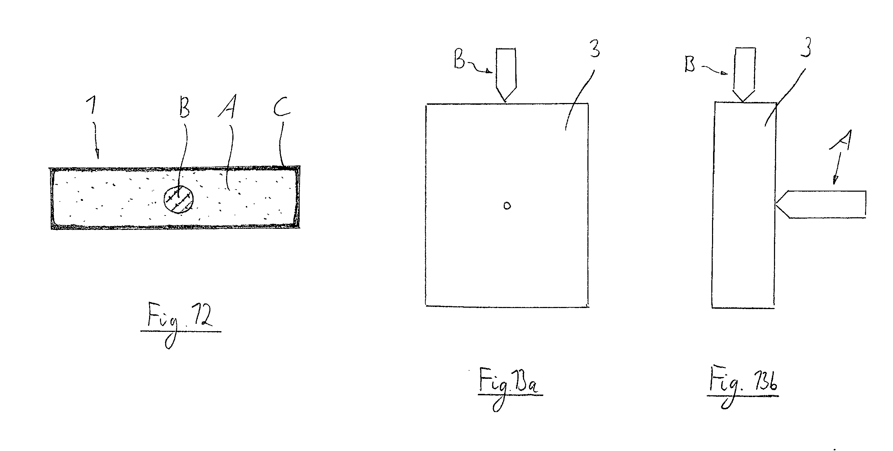

Fig. 12 zeigt einen Schnitt durch ein Formteil 1 gemäß einer weiter Ausführungsform der Erfindung. Zu sehen ist das verstärkte Kunststoffmaterial B, das vollständig vom geschäumten Kunststoff A umgeben ist. Dieses wiederum ist von einem dritten Kunststoffmaterial C (Hautmaterial) ummantelt.

Durch die Kombination mit bekannten Verfahren, wie beispielsweise der variothermen Temperierung der Formnestoberflächen, können die geschäumten Formteile mit hervorragender Oberflächenqualität hergestellt werden. Außerdem kann durch diese Technik die Dicke der kompakten Randschicht vergrößert werden.

Durch partielle oder vollständige Vergrößerung des Formnestvolumens vor, während oder nach Einbringen der eingespritzten Verstärkung (Komponente B) können Formteile mit hohen Festigkeiten bei geringem Gewicht erzeugt werden.

Fig. 13a und 13b zeigen eine mögliche Anordnung der Spritzeinheiten beim Einsatz des vorgeschlagenen Verfahrens. Die Spritzeinheit, die das Formteil wie dargestellt von der Mitte her füllt, spritzt den geschäumten Kunststoff A ein. Die vertikal angeordnete Einheit spritzt die Verstärkung (Kunststoff B) in die zuvor eingespritzte geschäumte Schmelze A ein.

Der Bereich, in dem die Verstärkung (Komponente B) in den geschäumten Kunststoff (Komponente A) gespritzt wird, kann auch temperiert oder zyklisch beheizt und gekühlt werden, um ein leichteres Eindringen der Verstärkung in die geschäumte Schmelze zu ermöglichen.

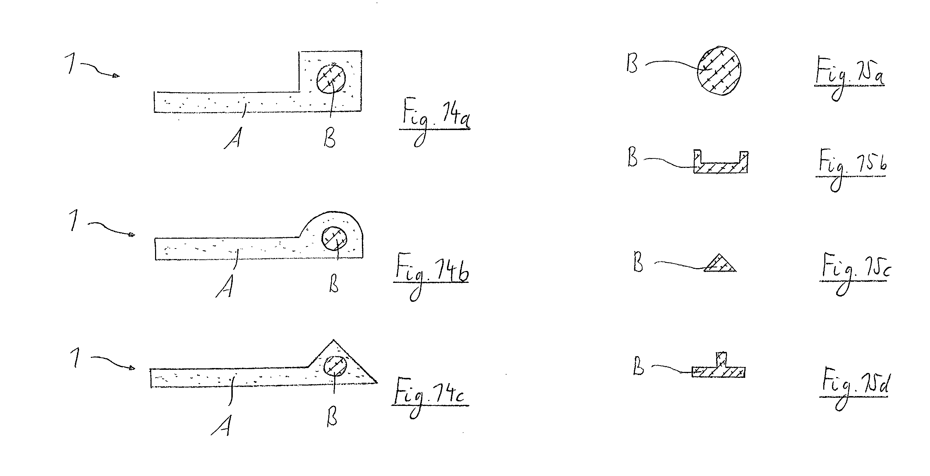

In Fig. 14 sind verschiedene ausgeformte Bereiche eines Formteils 1 dargestellt, in die ein Verstärkungsstrang (Komponente B) eingespritzt ist.

Fig. 15 zeigt in verschiedenen Varianten, dass bei ausreichend niedriger Schmelzetemperatur der Komponente B durch entsprechende Ausformung der temperierten Düse oder des Angusses unterschiedliche Profile des Verstärkungsstranges, d. h. der zweiten Kunststoffkomponente B erzeugt werden können. Diese werden dann in die zuerst eingespritzte Komponente A vorgeformt eingebracht.

Obwohl sich das Verfahren vor allem für geschäumte Formteile eignet, ist es auch bei kompakt gespritzten oder auch mit Fluidunterstützung gespritzten Formteilen einsetzbar, wobei wiederum eine Druckabsenkung und/oder eine Viskositätssteigerung zum Einsatz kommen.

### Bezugszeichenliste:

- 1: Kunststoff-Formteil
- 2: Kavität
- 3: Spritzgießwerkzeug
- 4: Bereich reduzierten Drucks
- 5: Schieber
- 6: Überlaufkavität
- 7: bewegliche Wandung
- 8: Widerstandselement (Fließbremse)
- 9: Kühlelement
- 10: Anguss
- 11: Plastifizier- und Einspritzeinheit
- 12: Ventil
- 13: Kolben

- A: erste Kunststoffschmelze / -komponente (geschäumter Kunststoff)
- B: zweite Kunststoffschmelze / -komponente (verstärkter Kunststoff)
- C: dritte Kunststoffschmelze / -komponente (Hautmaterial)

## Patentansprüche

1. Verfahren zum Spritzgießen von Kunststoff-Formteilen (1) aus thermoplastischem Kunststoff, bei dem in die Kavität (2) eines Spritzgießwerkzeugs (3) mindestens zwei unterschiedliche thermoplastische Kunststoffschmelzen (A, B) eingespritzt werden, um das Formteil (1) zu bilden, wobei zunächst eine erste Kunststoffschmelze (A) in die Kavität (2) des Spritzgießwerkzeugs (3) eingespritzt wird, so dass die Kavität (2) zumindest teilweise mit der ersten Kunststoffschmelze (A) gefüllt wird, und wobei anschließend eine zweite Kunststoffschmelze (B) in die Kavität (2) des Spritzgießwerkzeugs (3) und in die erste sich in der Kavität (2) befindliche Kunststoffschmelze (A) eingespritzt wird,
**dadurch gekennzeichnet,**
**dass** die Ausbreitung der zweiten Kunststoffschmelze (B) in der ersten Kunststoffschmelze (A) in eine definierte Richtung oder in einen definierten Bereich dadurch vorgegeben wird, dass vor oder während des Einspritzens der zweiten Kunststoffschmelze (B) in der ersten Kunststoffschmelze (A) ein Bereich (4) reduzierten Drucks erzeugt wird und/oder dass vor oder während des Einspritzens der zweiten Kunststoffschmelze (B) die Viskosität der zweiten Kunststoffschmelze (B) vergrößert wird.

2. Verfahren nach Anspruch 1, **dadurch gekennzeichnet, dass** das Erzeugen des Bereichs (4) reduzierten Drucks erfolgt, indem ein zunächst in die Kavität (2) hineinragender Schieber (5) aus der Kavität (2) des Spritzgießwerkzeugs (3) bei bereits eingespritzter erster Kunststoffschmelze (A) herausgezogen wird, wobei die zweite Kunststoffschmelze (B) bevorzugt in das Volumen innerhalb der Kavität (2) injiziert wird, das vom sich zurückziehenden Schieber (5) freigegeben wird.

3. Verfahren nach Anspruch 1, **dadurch gekennzeichnet, dass** das Erzeugen des Bereichs (4) reduzierten Drucks erfolgt, indem ein Teil der in die Kavität (2) eingespritzte ersten Kunststoffschmelze (A) in eine Überlaufkavität (6) ausfließen gelassen wird, wobei das Volumen der Überlaufkavität (6) vorzugsweise während des Ausfließens der ersten Kunststoffschmelze (A) vergrößert wird.

4. Verfahren nach Anspruch 1, **dadurch gekennzeichnet, dass** das Erzeugen des Bereichs (4) reduzierten Drucks erfolgt, indem ein Teil der Wandung (7) der Kavität (2) bei bereits eingespritzter erster Kunststoffschmelze (A) verschoben wird, so dass sich das Volumen der Kavität (2) vergrößert.

5. Verfahren nach Anspruch 1, **dadurch gekennzeichnet, dass** das Erzeugen des Bereichs (4) reduzierten Drucks erfolgt, indem ein in den Strömungsweg zunächst hineinragendes Widerstandselement (8), das das Fließen der Kunststoffmaterials behindert, aus einer das Fließen behindernden Position in eine das Fließen nicht oder nur weniger behindernden Position zurückgezogen wird.

6. Verfahren nach Anspruch 1, **dadurch gekennzeichnet, dass** die Vergrößerung der Viskosität der zweiten Kunststoffschmelze (B) erfolgt, indem die Temperatur der zweiten Kunststoffschmelze (B) vor dem Eintritt in die erste Kunststoffschmelze (A) verringert wird, wobei vorzugsweise eine Kühlung (9) der zweiten Kunststoffschmelze (B) im Bereich des Angusses (10) erfolgt.

7. Verfahren nach Anspruch 1, **dadurch gekennzeichnet, dass** die Vergrößerung der Viskosität der zweiten Kunststoffschmelze (B) erfolgt, indem die Verarbeitung der zweiten Kunststoffschmelze (B) im Verhältnis zur Verarbeitung der ersten Kunststoffschmelze (A) bei geringerer Temperatur erfolgt.

8. Verfahren nach einem der Ansprüche 1 bis 7, **dadurch gekennzeichnet, dass** sowohl in der ersten Kunststoffschmelze (A) ein Bereich (4) reduzierten Drucks erzeugt wird als auch die Viskosität der zweiten Kunststoffschmelze (B) vergrößert wird.

9. Verfahren nach einem der Ansprüche 1 bis 8, **dadurch gekennzeichnet, dass** die erste Kunststoffschmelze (A) mit einem Treibmittel versehen ist oder ein Fluid in die erste Kunststoffschmelze (A) injiziert wird, um die erste Kunststoffschmelze (A) aufzuschäumen.

10. Verfahren nach einem der Ansprüche 1 bis 9, **dadurch gekennzeichnet, dass** die zweite Kunststoffschmelze (B) mit einem Verstärkungsmittel, insbesondere mit Verstärkungsfasern, bevorzugt in Form von Kohlenstoff-Fasern oder Glasfasern, versehen ist.
